# EUROPÄISCHE PATENTSCHRIFT

(11) **EP 3 988 367 B1**
(45) Veröffentlichungstag und Bekanntmachung des Hinweises auf die Patenterteilung: **03.05.2023**
(21) Anmeldenummer: 20203502.8
(22) Anmeldetag: 23.10.2020
(51) Int. Cl.: B60K 15/03, G01F 23/32, G01F 23/76

(54) **TANKVORRICHTUNG FÜR EIN KRAFTFAHRZEUG**
TANK FOR A MOTOR VEHICLE
DISPOSITIF DE RAVITAILLEMENT POUR UN VÉHICULE AUTOMOBILE

(43) Veröffentlichungstag der Anmeldung: 27.04.2022
(73) Patentinhaber: Magna Energy Storage Systems GesmbH, 8261 Sinabelkirchen (AT)
(72) Erfinder: URDL, Christian, 8113 Hitzendorf (AT); WIMMER, Florian, 8334 Riegersburg (AT)
(74) Vertreter: Zangger, Bernd

(56) Entgegenhaltungen:
- DE-A1-102007 026 146
- DE-A1-102008 045 539
- DE-B4-112012 005 441
- DE-T2- 69 318 657
- KR-A- 20130 026 635

## Beschreibung

### Gebiet der Erfindung

Die vorliegende Erfindung betrifft eine Tankvorrichtung für ein Kraftfahrzeug, beispielsweise einen Kraftstofftank für ein Kraftfahrzeug.

### Stand der Technik

Es ist bekannt, dass Tanks in Kraftfahrzeugen, wie beispielsweise Kraftstofftanks, im Inneren des Tankbehälters einen oder mehrere sogenannte "Hebelgeber" aufweisen können. Ein Hebelgeber weist einen Hebelarm auf, mit einem freien Ende, das sich durch den Hebelarm beschränkt "frei" bewegen kann. Am freien Ende kann beispielsweise ein Schwimmer angeordnet sein, der auf der Oberfläche einer Flüssigkeit im Tank, beispielsweise eines Kraftstoffes, schwimmen kann. An dem, dem freien Ende gegenüberliegenden Ende des Hebelarms kann der Hebelgeber befestigt sein und kann die Position des Hebelarms ausgelesen werden. Ein derartiger Hebelgeber kann insbesondere verwendet werden, um den aktuellen Füllstand eines Tanks zu erfassen, und wird dann auch als "Tankgeber" bezeichnet.

Für Hebelgeber in Tanks werden üblicherweise auch Endanschläge vorgesehen. Ein Endanschlag für einen Hebelgeber ist ein Bauteil, das üblicherweise an der Tankwand befestigt wird, und das einen definierten Endanschlag für den Hebelgeber bildet. Das Bauteil für den Endanschlag wird üblicherweise auch mit einer Oberfläche ausgebildet, die ein unerwünschtes Anhaften des Hebelgebers am Endanschlag-Bauteil verhindert.

Aus der DE 10 2008 045539 A1 ist eine Wasserpegelerfassungsvorrichtung für eine Geschirrspülmaschine bekannt, mit einem Waschbehälter zum Aufnehmen von Geschirr und einem im Waschbehälter angeordneten Wasserpegelsensor, dessen Position sich gemäß dem Wasserpegel im Waschbehälter bewegt. Dabei kann eine Anhaftungsunterdrückungseinheit zwischen dem Waschbehälter und dem Schwimmer installiert sein, um zu verhindern, dass der Schwimmer an einem bestimmten Abschnitt des Waschbehälters anhaftet.

Die DE 10 2007 026146 A1 offenbart eine Schwimmerarmanordnung für einen Fahrzeug-Kraftstofftank, umfassend eine in dem Kraftstofftank montierbare, erste Schwimmerstütze; eine in dem Kraftstofftank montierbare, zweite Schwimmerstütze; eine an der ersten Schwimmerstütze montierte, erste Widerstandskarte; eine an der zweiten Schwimmerstütze montierte, zweite Widerstandskarte, die von der ersten Widerstandskarte beabstandet ist und mit der ersten Widerstandskarte elektrisch in Reihe geschaltet ist; einen schwenkbar mit der ersten Widerstandskarte verbundenen und sich davon erstreckenden, ersten Schwimmerarm; einen schwenkbar mit der zweiten Widerstandskarte verbundenen und sich davon erstreckenden, zweiten Schwimmerarm; einen an dem ersten Schwimmerarm befestigten, ersten Schwimmer; und einen an dem zweiten Schwimmerarm befestigten, zweiten Schwimmer.

### Zusammenfassung der Erfindung

Es ist eine Aufgabe der Erfindung, eine Tankvorrichtung für ein Kraftfahrzeug umfassend einen Hebelgeber im Inneren eines Tankbehälters anzugeben, die einfach und kostengünstig gebaut werden kann und dabei eine zuverlässige Funktion des Hebelgebers ermöglicht.

Die Lösung der Aufgabe erfolgt durch eine Tankvorrichtung für ein Kraftfahrzeug umfassend die Merkmale des Anspruchs 1.

Erfindungsgemäß wird im Inneren eines Tankbehälters ein Hebelgeber verwendet, wobei als Endanschlag für den Hebelgeber kein eigenes Bauteil verwendet wird, sondern die Wand des Tankbehälters selbst so ausgebildet wird, dass sie als zuverlässiger Endanschlag für den Hebelgeber wirken kann. Die Wand des Tankbehälters wird daher in einem Bereich, der dazu vorgesehen ist, als Endanschlag zu wirken, dem "Anschlagbereich", als Anschlagszone ausgebildet. Die Tankwand ist daher in diesem Anschlagbereich speziell ausgeformt, um ein Anhaften des Endes des Hebelgebers, beispielsweise eines Schwimmers, zu verhindern. Ein eigenes Bauteil, das den Anschlag bilden würde, kann daher eingespart werden und muss auch nicht aufwändig an der Tankwand befestigt werden.

Der Anschlagbereich ist eine begrenzte Zone um den vorgesehenen Auftreffpunkt bzw. die vorgesehene Auftrefffläche des Endbereichs des Hebelgebers. Wenn mehrere Hebelgeber im Tank vorgesehen sind, gibt es vorzugsweise für jeden Hebelgeber jeweils einen Anschlagbereich, der wie beschrieben ausgebildet ist. Bevorzugt ist die Tankwand außerhalb der Anschlagbereiche anders ausgebildet, als in dem oder den Anschlagbereichen, so dass dort ein Anhaften des Hebelgebers an der Tankwand weniger oder gar nicht verhindert würde. Insbesondere kann die Innenseite der Tankwand außerhalb der Anschlagbereiche glatt und/oder eben ausgebildet sein.

Erfindungsgemäß weist der Anschlagbereich der Tankwand eine Oberflächenstruktur auf. Die Oberfläche der Tankwand weist Strukturen auf, um ein Anhaften des Hebelgebers am Tank im Vergleich zu einer glatten Oberfläche zu verringern.

Die Oberflächenstruktur umfasst erfindungsgemäß Erhebungen und Vertiefungen in Form von Riefen oder Rippen.

Der Hebelgeber kann in einem Endbereich eine Anschlagfläche aufweisen, die zum Anschlagen am Anschlagbereich der Tankwand vorgesehen ist. Der Anschlagbereich der Tankwand ist bevorzugt größer ausgebildet, als die Anschlagfläche des Hebelgebers. Der Anschlagbereich der Tankwand umfasst bevorzugt eine Fläche die maximal 20 mm oder maximal 10 mm Seitenlänge oder Durchmesser hat.

Die Anschlagfläche des Hebelgebers ist bevorzugt an einem Schwimmkörper des Hebelgebers angeordnet.

Die zumindest eine Anschlagfläche oder die mehreren Anschlagflächen sind bevorzugt an einer in Einbaulage oberen Tankwand der Tankvorrichtung angeordnet.

Zusätzlich weist der Anschlagbereich der Tankwand zumindest eine Verformung nach innen oder nach außen auf, bevorzugt eine Wölbung, insbesondere eine Bombierung.

### Kurzbeschreibung der Zeichnungen

Die Erfindung wird im Folgenden beispielhaft unter Bezugnahme auf die Zeichnungen beschrieben.
- Fig. 1: ist eine dreidimensionale Teildarstellung einer erfindungsgemäßen Tankvorrichtung.
- Fig. 2: ist eine Draufsicht von Innen auf den Anschlagbereich einer Tankvorrichtung gemäß Fig. 1.
- Fig. 3: ist eine seitliche Ansicht auf den Anschlagbereich einer Tankvorrichtung gemäß Fig. 2.
- Fig. 4: ist eine Schnittansicht des Anschlagbereichs einer Tankvorrichtung gemäß Fig. 3.

### Detaillierte Beschreibung der Erfindung

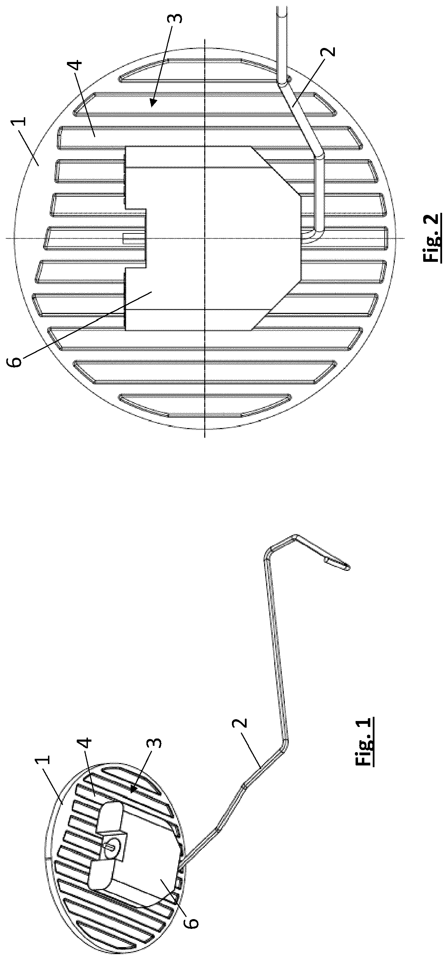

In den Fig. 1-4 ist eine erfindungsgemäße Tankvorrichtung für ein Kraftfahrzeug dargestellt. Fig. 1 zeigt im Überblich einen Ausschnitt aus dem Inneren der Tankvorrichtung, die einen durch eine Tankwand 1 ausgebildeten Tankbehälter umfasst. Im Inneren des Tanks ist ein Hebelgeber 2 angeordnet, beispielsweise um einen Füllstand des Tanks zu bestimmen.

In der Nähe eines Anschlagbereichs 3 an der Tankwand 1, der insbesondere in Einbaulage oben im Tank angeordnet sein kann, weist der Hebelgeber 2 eine Anschlagfläche an einem Schwimmkörper 6 bzw. Schwimmer des Hebelgebers 2 auf.

Ein Anschlagbereich 3 der Tankwand 1 ist dazu ausgebildet, als Endanschlag des Hebelgebers 2, nämlich für den Schwimmkörper 6, zu wirken und ein Anhaften des Hebelgebers 2 am Anschlagbereich 3 der Tankwand 1 zu verhindern.

Dazu weist der Anschlagbereich 3 der Tankwand 1 eine Oberflächenstruktur auf. Die Oberflächenstruktur weist in der dargestellten Ausführungsform Erhebungen und Vertiefungen in Form von Riefen oder Rippen 4 auf.

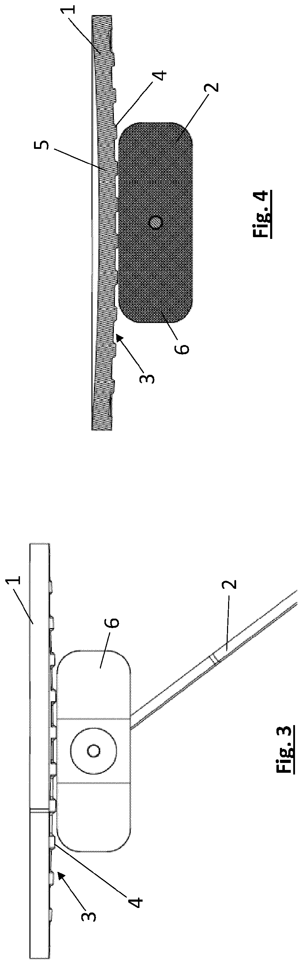

Wie in der Fig. 3 und besonders gut in der Schnittdarstellung der Fig. 4 zu sehen, ist der Anschlagbereich 3 der Tankwand 1 zudem mit einer Wölbung 5 nach innen ausgebildet, also bombiert.

Der Anschlagbereich 3 ist einstückig durch die Tankwand 1 ausgebildet.

Der Anschlagbereich 3 dient dazu, ein Anhaften des Hebelgebers 2 an der Tankwand 1 zu verhindern, ohne hierfür ein zusätzliches Bauteil an der Tankwand befestigen zu müssen.

### Bezugszeichenliste

- 1: Tankwand
- 2: Hebelgeber
- 3: Anschlagbereich
- 4: Rippen
- 5: Wölbung
- 6: Schwimmkörper

## Patentansprüche

1. Tankvorrichtung für ein Kraftfahrzeug umfassend einen durch eine Tankwand (1) ausgebildeten Tankbehälter und zumindest einen Hebelgeber (2) im Inneren des Tankbehälters,
wobei zumindest ein Anschlagbereich (3) der Tankwand dazu ausgebildet ist, als Endanschlag des Hebelgebers (2) zu wirken und ein Anhaften des Hebelgebers (2) am Anschlagbereich (3) der Tankwand (1) zu verhindern,
**dadurch gekennzeichnet, dass** der Anschlagbereich (3) der Tankwand (1) eine Oberflächenstruktur, die Erhebungen und Vertiefungen in Form von Riefen oder Rippen umfasst, und zusätzlich zumindest eine Verformung nach innen oder nach außen aufweist.

2. Tankvorrichtung nach Anspruch 1,
**dadurch gekennzeichnet , dass** der Anschlagbereich (3) der Tankwand (1) eine Wölbung (5), nach innen oder nach außen aufweist, insbesondere eine Bombierung.

3. Tankvorrichtung nach zumindest einem der vorhergehenden Ansprüche,
**dadurch gekennzeichnet , dass** der Anschlagbereich (3) der Tankwand (1) an einer in Einbaulage oben liegenden Tankwand (1) ausgebildet ist.

4. Tankvorrichtung nach zumindest einem der vorhergehenden Ansprüche,
**dadurch gekennzeichnet , dass** an einem Ende des Hebelgebers (2) ein Schwimmkörper (6) ausgebildet ist, der zum Anschlag an dem Anschlagbereich (3) vorgesehen ist. -.-.-.

## Claims

1. Tank device for a motor vehicle comprising a tank container, which is formed by a tank wall (1), and at least one lever sensor (2) in the interior of the tank container,
wherein at least one stop region (3) of the tank wall is designed to act as an end stop of the lever sensor (2) and to prevent adhesion of the lever sensor (2) to the stop region (3) of the tank wall (1) **characterized in that** the stop region (3) of the tank wall (1) has a surface structure,
which comprises elevations and depressions in the form of corrugations or ribs (4), and additionally has at least one deformation towards the inside or towards the outside.

2. Tank device according to Claim 1,
**characterized in that** the stop region (3) of the tank wall (1) has a curvature (5), towards the inside or towards the outside, in particular a camber.

3. Tank device according to at least one of the preceding claims,
**characterized in that** the stop region (3) of the tank wall (1) is formed on a tank wall (1) situated at the top in the installed position.

4. Tank device according to at least one of the preceding claims,
**characterized in that** a floating element (6) is formed at one end of the lever sensor (2), which floating element is provided for abutment against the stop region (3).

## Revendications

1. Dispositif de ravitaillement pour un véhicule automobile comprenant un contenant de ravitaillement réalisé par une paroi de ravitaillement (1) et au moins un indicateur à levier (2) à l'intérieur du contenant de ravitaillement,
au moins une zone de butée (3) de la paroi de ravitaillement étant réalisée de manière à agir en tant que butée d'extrémité de l'indicateur à levier (2) et empêcher une adhésion de l'indicateur à levier (2) à la zone de butée (3) de la paroi de ravitaillement (1),
**caractérisé en ce que** la zone de butée (3) de la paroi de ravitaillement (1) présente une structure de surface qui comprend des bosses et des creux sous forme de stries ou de nervures, et en outre au moins une déformation vers l'intérieur ou vers l'extérieur.

2. Dispositif de ravitaillement selon la revendication 1, **caractérisé en ce que** la zone de butée (3) de la paroi de ravitaillement (1) présente une cambrure (5), vers l'intérieur ou vers l'extérieur, en particulier un bombement.

3. Dispositif de ravitaillement selon au moins l'une quelconque des revendications précédentes, **caractérisé en ce que** la zone de butée (3) de la paroi de ravitaillement (1) est réalisée sur une paroi de ravitaillement (1) située en haut en position de montage.

4. Dispositif de ravitaillement selon au moins l'une quelconque des revendications précédentes, **caractérisé en ce qu'**un corps flottant (6) est réalisé à une extrémité de l'indicateur à levier (2), lequel est prévu pour venir en butée contre la zone de butée (3).
